# EUROPEAN PATENT SPECIFICATION

(11) **EP 1 881 554 B1**
(45) Date of publication and mention of the grant of the patent: **02.09.2015**
(21) Application number: 07013287.3
(22) Date of filing: 06.07.2007
(51) Int. Cl.: H01Q 1/24, H01Q 7/00, H01Q 9/42, H01Q 5/364

(54) **Antenna and mobile terminal using the same**
Antenne und ihre Verwendung in einem mobilen Terminal
Antenne et un terminal mobile en utilisant la même

(30) Priority: 07.07.2006 KR 20060063805
(43) Date of publication of application: 23.01.2008
(73) Proprietor: LG Electronics Inc., Yeongdeungpo-gu Seoul 150-721 (KR)
(72) Inventor: Seo, Dong Kyu, Bukjeong-dong Jung-gu Ulsan-si (KR)
(74) Representative: Katérle, Axel

(56) References cited:
- EP-A- 1 168 495
- US-A1- 2005 190 108
- US-B1- 6 603 430

## Description

### CROSS-REFERENCE TO RELATED APPLICATION

This application claims the benefit of earlier filing date and right of priority to Korean Application No. 10-2006-0063805 filed on July 7, 2006.

### FIELD OF THE INVENTION

The present invention is directed to an antenna and a mobile terminal using the same.

### DESCRIPTION OF THE RELATED ART

In general, an antenna is means for receiving electric waves introduced from the outside and transmitting signals, received from other internal units, to the outside. The antenna is an indispensable component in a wireless communication device, i.e., a mobile terminal. The antenna serves as a medium when transmitting and receiving signals with a base station, thus improving the signal quality. In the antenna, there is a tendency that resonance structures resonating in respective bands are separated from each other when being designed in a multi-band.

However, in recent years, there is a tendency that mobile terminals have numerous components built therein, and have become miniaturized or slim. Accordingly, there is a case where a distance between the antenna and several components is not sufficient. In this case, in order to protect circuits within the mobile terminal from the antenna or to protect the antenna from circuit noise, shielding walls are used.

When the shielding walls are adjacent to each other, a specific band is located close to the shielding wall in a structure in which multiple bands are separated from each other in order to improve the characteristics of the antenna itself.

This antenna structure is problematic in that a total effective radiation output is low because a part of the effective radiation is absorbed by the shielding walls when the antenna is active.

US 2004/0246180 A1 shows an antenna according to the prior-art described.

### SUMMARY OF THE INVENTION

The invention is set out in the independent claim. Optional features form part of the dependent claims. In one aspect of the present invention a mobile terminal is provided, the mobile terminal includes a shielding unit, and an antenna comprising a feed unit and a ground unit formed over the shielding unit, a first pattern having a first end connected to top a surface of the feed unit and a second end connected to the ground unit and isolated from the shielding unit, and the second pattern connected to a first end of the first pattern and having an open end formed close to a second end of the first pattern, wherein the first pattern has a high frequency band characteristic, and the second pattern has a low frequency band characteristic.

It is contemplated that a current applied from the feed unit of the antenna flows through the first pattern in a loop structure to the ground unit. It is further contemplated that the first pattern of the antenna is isolated from the shielding unit by at least the lengths of the feed unit and the ground unit.

It is contemplated that the first pattern formed between the feed unit and the ground unit of the antenna has a polygonal shape. It is further contemplated that the first pattern between the feed unit and the ground unit of the antenna forms one of a semicircle shape, a triangular shape, and a trapezoidal shape.

It is contemplated that the first pattern of the antenna is wider than the second pattern. It is further contemplated that the first pattern of the antenna operates as a loop antenna, and the second pattern operates as a Planar Inverted-F Antenna (PIFA).

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed. These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The invention will be described in detail with reference to the following drawings in which like numerals refer to like elements.
FIG. 1 is a schematic illustrating an antenna according to an embodiment of the present invention.
FIG. 2 is a schematic illustrating an antenna according to another embodiment of the present invention.
FIG. 3 is a schematic illustrating an antenna according to another embodiment of the present invention.
FIG. 4 is a schematic illustrating an antenna according to another embodiment of the present invention.
FIG. 5 is a schematic illustrating an antenna according to another embodiment of the present invention.
FIG. 6 illustrates a mobile terminal comprising the antenna according to an embodiment of the present invention.
FIG. 7 illustrates the measurements of radiation outputs of the antenna according to an embodiment of the present invention.

### DETAILED DESCRIPTION OF THE INVENTION

An antenna and a mobile terminal using the same will now be described in detail with reference to the drawings.

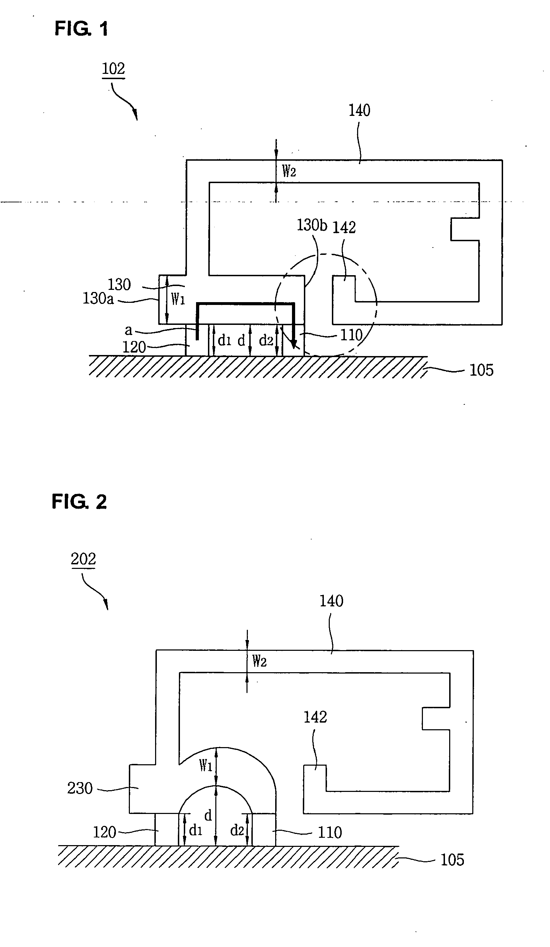

FIG. 1 is a schematic illustrating an antenna 102 according to an embodiment of the present invention. As illustrated in FIG. 1, an antenna 102 according to an embodiment of the present invention comprises a ground unit 110, a feed unit 120, a first pattern 130 and a second pattern 140.

The ground unit 110 functions to provide the antenna 102 with a ground path for an electrical signal. In operation of the antenna 102, the feed unit 120 applies the electrical signal to the first pattern 130 and the second pattern 140.

The first pattern 130 has a first end 130a connected to the feed unit 120 and a second end 130b connected to the ground unit 110. The first pattern 130 is rounded in a loop form in a direction that it is isolated from the shielding unit 105, and has a high frequency band characteristic. The first pattern 130 has a resonant frequency from approximately 1800 MHz to 2000 MHz.

The second pattern 140 is connected to the first end 130a of the first pattern 130, and has an open end formed close to the second end 130b of the first pattern 130. The second pattern 140 has a low frequency band characteristic. That is, the second pattern 140 has a resonant frequency from approximately 850 MHz to 900 MHz.

The operation of the antenna 102 according to the present invention will be described below.

The ground unit 110 and the feed unit 120 are connected to the shielding unit 105 and adapted to reduce noise introduced into the antenna 102. The ground unit 110 and the feed unit 120 have specific lengths d₁ and d₂, respectively, and are connected to the first pattern 130. The first pattern 130 has a specific width w₁. The first pattern 130 is spaced apart from the shielding unit 105 by a distance "d" that is at least as large as the lengths d₁ of the feed unit 120 and d₂ of the ground unit 110.

At this time, the first pattern 130 has a loop structure having a current path "a," as illustrated in FIG. 1. The first pattern 130 loop structure fulfills the design condition which is subject to the fact that the pattern length should be about 1/2 wavelength.

With the first pattern 130 loop structure isolated from the shielding unit 105 as described above, the first pattern has the first end 130a connected to the feed unit 120 and the second end 130b connected to the ground unit 110 establishing an electrical characteristic at both ends. Accordingly, the first pattern 130 has a wide band characteristic and is less influenced by peripheral conditions.

Accordingly, the first pattern 130 has a characteristics robust to hand effect in an actual high band. The first pattern 130 has the loop structure, as described above. Therefore, active performance can be improved depending on the separation of the first pattern 130 from the shielding unit 105. For example, since the first pattern 130 is isolated from the shielding unit 105, the formation of an actual electromagnetic field radiated from the antenna 102 is not absorbed on the shielding unit.

The design of the present invention is distinguished from general antenna designs which guarantee the separation between multiple bands to the greatest extent in the case of a multi-band antenna, thereby improving the interference effect with the shielding unit as the distance between the antenna pattern and the shielding unit decreases, and causing a reduction in the active performance incurred by the formation of the field within a close distance. Consequently, an effective radiation characteristic can be improved.

Preferably, as disclosed above, the antenna first pattern 130, i.e., the start end of the feed unit 120 and the first pattern having the greatest current distribution, is positioned away from the shielding unit 105. Accordingly, the formation of field current at this portion is less hindered by the shielding unit 105. If the distance between the shielding unit 105 and the radiation source is minimized as described above, then the losses for an active antenna radiation output can be minimized regardless of the passive performance of the antenna 102, thereby resulting in improved radiation efficiency.

The first pattern 130 has a first end 130a connected to the second pattern 140. The second pattern 140 has an end 142 formed close to a portion of the second end 130b of the first pattern 130 that is connected to the ground unit 110, therefore it is PIFA structure and the second pattern has a low frequency band characteristic.

The width w₂ of the second pattern 140 is narrower than the width w₁ of the first pattern 130. This is because the first pattern 130 has a high frequency band characteristic, and must have a band wide enough to cover a Digital Cellular System (DCS), a Personal Communications Services (PCS), and Wideband Code Division Multiple Access (WCDMA) 2100.

The second pattern 140 shares the feed unit 120 supply via loop structure of the first pattern 130, and fulfills the 1/4 wavelength condition for a short antenna having one end connected to both the feed line and the short line (connected to ground of the circuit), and another end unconnected, so called inverted-F antenna (IFA). The second pattern 140 begins at the loop structure of the first pattern 130. Therefore, the second pattern 140 includes both the feed unit 120 and the ground unit 110 of the first pattern 130 loop structure. Accordingly, the second pattern 140 becomes a PLANAR INVERTED-F ANTENNA (PIFA) structure.

By using the structure in which the antenna 102 loop structure and the PIFA structure are mixed, the performance can be improved through the loop structure in a high band, and an implemented area can be minimized using the PIFA structure in a low band.

The end 142 of the second pattern 140 is formed close to the portion of the first pattern 130 which is connected to the ground unit 110, thus forming coupling. The term "coupling" refers to a phenomenon caused by the ends of the high frequency band and the low frequency band having closely positioned structures, wherein there is expansion of the high frequency band and the low frequency band and a center frequency of a high band frequency moves, such that the frequency moves to a desired band through adequate tuning.

The band can be expanded using a parasitic element grounded in the PIFA structure. A small frequency movement characteristic is obtained along with such band expansion. By combining these theories, a desired bandwidth and a desired resonant frequency can be obtained through tuning.

In the above embodiment, it has been described that a portion in which the antenna first pattern 130 is connected to the feed unit 120 and the ground unit 110 forms a straight line, and has the same length d as the lengths d₁ and d₂ of the feed unit 120 and the ground unit 110. However, the present invention is not limited to the above embodiment, but may include various alternative embodiments, as illustrated in FIGS. 2-4.

As illustrated in FIGS. 2-4, all the structures and operational characteristics of the antenna 102 except for the shape of the first pattern 130 are the same as those described with respect to FIG. 1 and will not be described in detail.

FIG. 2 is a schematic illustrating an antenna 202 according to another embodiment of the present invention. As illustrated in FIG. 2. the shape of the first pattern 230 between the feed unit 120 and the ground unit 110 can be a semicircle.

As the pattern between the feed unit 120 and the ground unit 110 in the first pattern 230 forms the semicircle shape, the first pattern 230 is further isolated from the shielding unit 105 more than the lengths d₁ of the feed unit 120 and d₂ of the ground unit 110. The first pattern 230 is further isolated from the shielding unit 105, therefore an actual active performance, such as an effective output or an effective sensitivity, can be further improved.

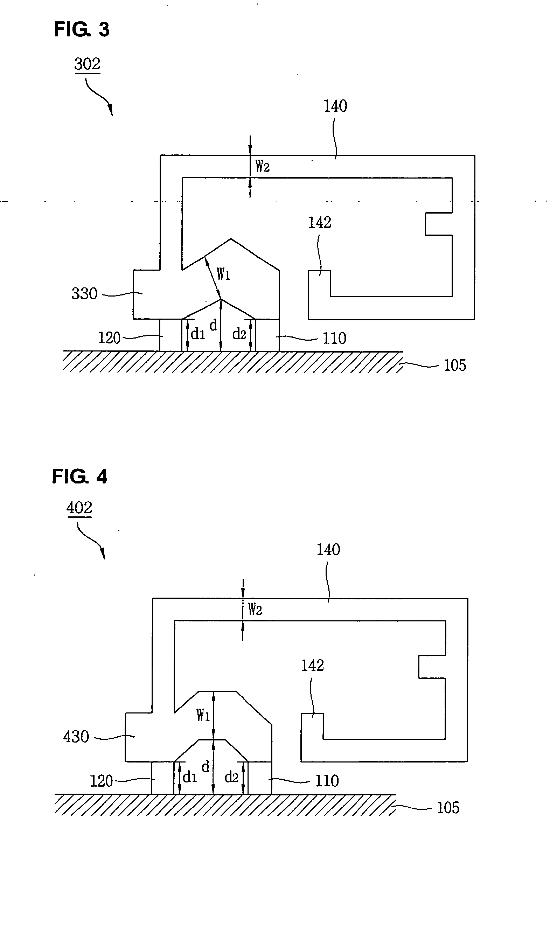

FIG. 3 is a schematic illustrating an antenna 302 according to another embodiment of the present invention. As illustrated in FIG. 3, the shape of the first pattern 330 between the feed unit 120 and the ground unit 110 can be a triangular.

The first pattern 330 is further isolated from the shielding unit 105 more than lengths d₁ of the feed unit 120 and d₂ of the ground unit 110, when the shape of the first pattern between the feed unit 120 and the ground unit 110 forms the triangular shape.

FIG. 4 is a schematic illustrating an antenna 402 according to another embodiment of the present invention. As illustrated in FIG. 4, the shape of the first pattern 430 between a feed unit 120 and a ground unit 110 is a semi-trapezoid. Accordingly, the first pattern 430 can be further isolated from the shielding unit 105 by more than lengths d₁ of the feed unit 120 and d₂ the ground unit 110.

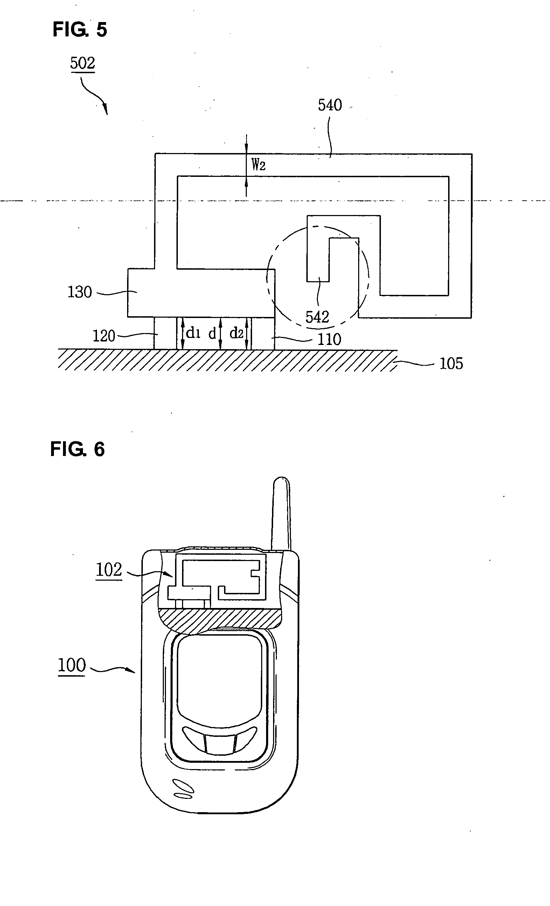

FIG. 5 is a schematic illustrating an antenna 502 according to another embodiment of the present invention. As illustrated in FIG. 5, the second pattern 540 includes a winding open end structure. The second pattern 540 has an open end 542 formed close to a portion of the first pattern 130 which is connected to the ground unit 110. The second pattern 540 and the first pattern 130 are coupled with the feed unit as described previously. However, by forming the second pattern 540 in the winding structure, the antenna 502 can be further miniaturized.

All of the design aspects of antenna 102-502, as disclosed above, can be mounted in a mobile terminal 100.

FIG. 6 illustrates a mobile terminal 100 comprising an antenna 102 according to an embodiment of the present invention. As illustrated in FIG. 6, the antenna 102 can be mounted in the mobile terminal 100.

For example, the shielding unit 105 is installed in order to reduce noise induced into the antenna 102 from a main circuit (not shown) or to protect the main circuit from the antenna 102.

The shielding unit 105 can generally use a camera shielding structure (not shown). The camera shielding structure is connected to a ground surface of the mobile terminal 100, thus forming a ground surface path.

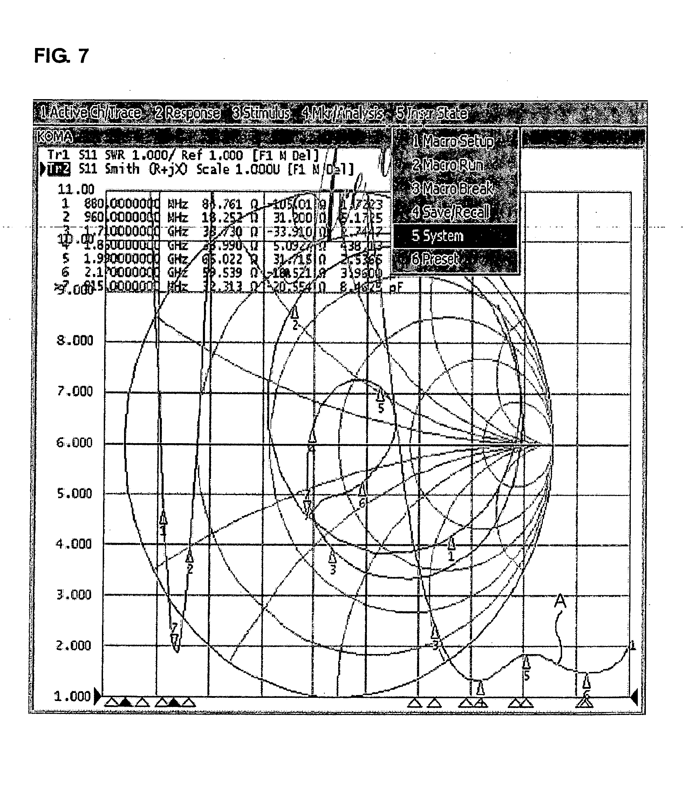

The radiation output of the antenna 102 when mounted in the mobile terminal 100, as disclosed above, will be described with reference to FIG. 7.

FIG. 7 illustrates the radiation output measurements of the antenna 102 according to an embodiment of the present invention. From FIG. 7, it can be seen that frequency response characteristics measured using a network analyzer of the antenna 102 according to an embodiment of the present invention covers all GSM900, DCS, PCS, and WCDMA2100 bands. At this time, resonance is good and the antenna efficiency is increased below a line A.

The total radiation output power of the antenna 102 will be described with reference to Table 1.

**<Table 1>.**

| | Before pattern isolated | After pattern isolated |
|---|---|---|
| WCDMA2100 | 15.96 | 16.53 |
| GSM900 | 17.67 | 24.052 |

From Table 1, it can be seen that the radiation output is improved by about 0.5 dB in the WCDMA band after the pattern is isolated compared with before the pattern was isolated, and the GSM900 band is improved by about 6.5 dB. In particular, the GSM900 band has been significantly improved, because the pattern of the antenna 102 is isolated from the shielding unit 105 operating as the ground surface.

The shape of the first pattern 130 is not limited to the shapes described in the above embodiments, but may include all polygonal shapes. Accordingly, the first pattern 130 can be further isolated from the shielding unit 105, thus improving the characteristics of the antenna 102.

As described above, the present invention has the following advantages.

First, by using a new structure in which the loop structure and the PIFA structure are combined, the performance can be improved through the loop structure in a high band, and an implementation area can be minimized through the PIFA structure in a low band.

Second, in the shielding unit, the feed unit is located away from a point with large current distributions. Therefore, it is possible to easily improve active antenna performance.

Third, the end of the low frequency band is formed close to the ground unit of the high frequency band, and coupled thereto. Accordingly, there are advantages in that a wider bandwidth and a desired resonant frequency can be obtained easily.

Fourth, there are advantages in that the hand effect and the effective performance can be improved.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An antenna adapted to reduce the effect of noise in a mobile terminal, comprising:
- a shielding unit (105);
- a feed unit (120) and a ground unit (110) formed over the shielding unit;
- a first pattern (230; 330; 430) having a first end connected to a top surface of the feed unit and a second end connected to the ground unit and isolated from the shielding unit; and
- a second pattern (140) connected to a first end of the first pattern and having an open end (142) formed close to the second end of the first pattern so as to form coupling between the first pattern and the second pattern, wherein the first pattern has a high frequency band characteristic, and the second pattern has a low frequency band characteristic;
**characterized in that** a portion of the first pattern (230; 330; 430) between the first end and the second end is isolated from the shielding unit (105) by more than the lengths of the feed unit (120) and the ground unit (110), wherein the first pattern between the feed unit and the ground unit of the antenna forms one of a semicircle shape, a triangular shape and trapezoidal shape.

2. The antenna of claim 1, wherein a current applied from the feed unit (120) flows through the first pattern (230; 330; 430) in a loop structure to the ground unit (110).

3. The antenna of any one preceding claim, wherein the first and second patterns together with the feed unit and ground unit form a Planar Inverted-F Antenna.

4. The antenna of any one preceding claim, wherein an open end winding structure (542) of the second pattern (540) is formed relative to a portion of the second end of the first pattern to form coupling between the open end winding structure and the portion of the second end.²

5. The antenna of any one preceding claim, wherein the shielding unit (105) operates as a ground surface.

6. A mobile terminal comprising an antenna as claimed in any one preceding claim.

7. The mobile terminal of claim 6, wherein the shielding unit (105) separates a main circuit of the terminal from the antenna.

8. The mobile terminal of claim 6 or 7, wherein the shielding unit (105) is a camera shielding structure.

## Patentansprüche

1. Antenne, welche dazu ausgelegt ist, den Effekt von Rauschen in einem mobilen Endgerät zu reduzieren, umfassend:
- eine Abschirmeinheit (105),
- eine Speiseeinheit (120) sowie eine Masseeinheit (110), welche über der Abschirmeinheit gebildet sind,
- ein erstes Muster (230; 330; 430) mit einem ersten Ende, welches mit einer Oberseite der Speiseeinheit verbunden ist, und einem zweiten Ende, welches mit der Masseeinheit verbunden ist und von der Abschirmeinheit isoliert ist, und
- ein zweites Muster (140), welches mit einem ersten Ende des ersten Musters verbunden ist und ein offenes Ende (142) aufweist, welches nahe dem zweiten Ende des ersten Musters gebildet ist, um so eine Kopplung zwischen dem ersten Muster und dem zweiten Muster herzustellen, wobei das erste Muster eine Hochfrequenzband-Charakteristik besitzt und das zweite Muster eine Niederfrequenzband-Charakteristik besitzt,
**dadurch gekennzeichnet, dass** ein Abschnitt des ersten Musters (230; 330; 430) zwischen dem ersten Ende und dem zweiten Ende von der Abschirmeinheit (105) um mehr als die Längen der Speiseeinheit (120) und der Masseeinheit (110) isoliert ist, wobei das erste Muster zwischen der Speiseeinheit und der Masseeinheit der Antenne eine Halbkreisform, eine Dreiecksform oder eine Trapezform bildet.

2. Antenne nach Anspruch 1, wobei ein von der Speiseeinheit (120) her angelegter Strom durch das erste Muster (230; 330; 430) in einer Schleifenstruktur zur Masseeinheit (110) fließt.

3. Antenne nach einem der vorhergehenden Ansprüche, wobei das erste und das zweite Muster zusammen mit der Speiseeinheit und der Masseeinheit eine planare Inverted-F Antenne bilden.

4. Antenne nach einem der vorhergehenden Ansprüche, wobei eine offenendige Windungsstruktur (542) des zweiten Musters (540) mit Bezug auf einen Abschnitt des zweiten Endes des ersten Musters gebildet ist, um eine Kopplung zwischen der offenendigen Windungsstruktur und dem Abschnitt des zweiten Endes herzustellen.

5. Antenne nach einem der vorhergehenden Ansprüche, wobei die Abschirmeinheit (105) als Massefläche dient.

6. Mobiles Endgerät mit einer Antenne nach einem der vorhergehenden Ansprüche.

7. Mobiles Endgerät nach Anspruch 6, wobei die Abschirmeinheit (105) eine Hauptschaltung des Endgeräts von der Antenne separiert.

8. Mobiles Endgerät nach Anspruch 6 oder 7, wobei die Abschirmeinheit (105) eine Kameraabschirmstruktur ist.

## Revendications

1. Antenne adaptée à réduire l'effet de bruit dans un terminal mobile, comprenant :
- une unité (105) de protection ;
- une unité (120) d'alimentation et une unité (110) de mise à la masse formées par-dessus l'unité de protection ;
- un premier tracé (230 ; 330 ; 430) ayant une première extrémité connectée à une surface supérieure de l'unité d'alimentation et une deuxième extrémité connectée à l'unité de mise à la masse et isolée de l'unité de protection ; et
- un deuxième tracé (140) connecté à une première extrémité du premier tracé et ayant une extrémité ouverte (142) formée à proximité de la deuxième extrémité du premier tracé de façon à former un couplage entre le premier tracé et le deuxième tracé, dans laquelle le premier tracé a une caractéristique de bande haute fréquence, et le deuxième tracé a une caractéristique de bande basse fréquence ;
**caractérisée en ce qu'**une partie du premier tracé (230 ; 330 ; 430) entre la première extrémité et la deuxième extrémité est isolée de l'unité (105) de protection de plus des longueurs de l'unité (120) d'alimentation et de l'unité (110) de mise à la masse, dans laquelle le premier tracé entre l'unité d'alimentation et l'unité de mise à la masse de l'antenne forme une parmi une forme semi-circulaire, une forme triangulaire et une forme trapézoïdale.

2. Antenne selon la revendication 1, dans laquelle un courant appliqué à partir de l'unité (120) d'alimentation traverse le premier tracé (230 ; 330 ; 430) dans une structure en boucle jusqu'à l'unité (110) de mise à la masse.

3. Antenne selon une quelconque revendication précédente, dans laquelle les premier et deuxième tracés, avec l'unité d'alimentation et l'unité de mise à la masse, forment une antenne plane en F inversé.

4. Antenne selon une quelconque revendication précédente, dans laquelle une structure d'enroulement (542) d'extrémité ouverte du deuxième tracé (540) est formée par rapport à une partie de la deuxième extrémité du premier tracé de façon à former un couplage entre la structure d'enroulement d'extrémité ouverte et la partie de la deuxième extrémité.

5. Antenne selon une quelconque revendication précédente, dans laquelle l'unité (105) de protection fonctionne comme une surface de mise à la masse.

6. Terminal mobile comprenant une antenne selon une quelconque revendication précédente.

7. Terminal mobile selon la revendication 6, dans lequel l'unité (105) de protection sépare un circuit principal du terminal de l'antenne.

8. Terminal mobile selon la revendication 6 ou 7, dans lequel l'unité (105) de protection est une structure de protection de caméra.
